Europäisches Patentamt

European Patent Office (11) Numéro de publication: **0 188 163**
**B1**

Office européen des brevets

(12) **FASCICULE DE BREVET EUROPEEN**

(45) Date de publication du fascicule du brevet:
22.03.89

(51) Int. Cl.⁴: **G 21 C 7/10**, G 21 C 7/12

(21) Numéro de dépôt: **85402651.5**

(22) Date de dépôt: **27.12.85**

(54) Dispositif de déplacement et d'accrochage d'une grappe de crayons de commande de réacteur nucléaire.

(30) Priorité: **27.12.84 FR 8419916**

(43) Date de publication de la demande:
**23.07.86 Bulletin 86/30**

(45) Mention de la délivrance du brevet:
**22.03.89 Bulletin 89/12**

(84) Etats contractants désignés:
**AT BE CH DE GB IT LI SE**

(56) Documents cités:
**EP-A- 0 111 435**
**FR-A- 2 106 373**
**US-A- 3 941 413**

**REVUE GENERALE NUCLEAIRE, no. 5,**
**septembre-octobre 1982, pages 443-448, Paris, FR; R.**
**ASSEDO et al.: "Conséquences du suivi du réseau pour**
**les composants mécaniques de la chaudière"**

(73) Titulaire: **FRAMATOME, Tour Fiat 1 place de la Coupole,**
**F-92400 Courbevoie (FR)**

(72) Inventeur: **Savary, Fernand, 14, rue Prince de Condé,**
**F-95200 Saint-Leu La Forêt (FR)**

(74) Mandataire: **Fort, Jacques et al, CABINET**
**PLASSERAUD 84, rue d'Amsterdam, F-75009 Paris (FR)**

ACTORUM AG

## Description

L'invention concerne un dispositif de déplacement et d'accrochage d'une grappe de crayons de commande déplaçable verticalement pour l'insérer dans un assemblage de combustible de réacteur nucléaire et pour l'extraire de l'assemblage qui est muni également d'une grappe externe déplaçable coxialement à la première et remplissant une fonction différente, ledit dispositif comprenant un arbre vertical de manœuvre portant des moyens de support de la grappe interne et muni de moyens moteurs permettant de le déplacer entre une position basse où la grappe interne repose sur l'assemblage et une position haute où la grappe interne est hors de l'assemblage.

L'utilisation de dispositifs de ce type permet de mieux assurer les fonctions de pilotage, de réglage de puissance, de compensation de l'épuisement du combustible et d'arrêt d'un réacteur nucléaire. On a en particulier proposé des ensembles dans lesquels l'une des grappes est constituée de crayons dits «noirs» présentant une très forte absorption neutronique et l'autre grappe est constituée d'éléments «gris». La grappe de crayons «noirs» est insérée dans le cœur du réacteur pour amener et maintenir ce dernier à l'arrêt, en la descendant en position basse. Le dispositif de déplacement peut être partiellement commun aux deux grappes (FR-A-2 106 373).

On a également proposé un dispositif du genre défini plus haut dans lequel deux ensembles distincts sont associés chacun à une des deux grappes constituées l'une de crayons absorbants, l'autre de crayons contenant un matériau fertile (FR-A-2 537 764). Mais aucune des dispositions antérieures n'autorise une pleine liberté de déplacement de l'une des grappes, alors que l'autre grappe est dans l'une ou l'autre de ses positions extrêmes, sauf au prix de mécanismes complexes.

L'invention vise à fournir un dispositif de déplacement vertical de la grappe interne de crayons de commande vers le cœur et hors du cœur d'un réacteur nucléaire, permettant d'amener et de maintenir cette grappe interne dans l'une ou l'autre de ses deux positions terminales et de laisser une pleine liberté de réglage d'une grappe externe quelle que soit celle des deux positions terminales qui est occupée par la grappe interne, et ne mettant en œuvre que des moyens simples.

Dans ce but, l'invention propose un dispositif de déplacement et d'accrochage conforme à la partie caractérisante de la revendication 1.

Le mécanisme d'accrochage en position haute sera généralement porté par un tube de guidage fixe, appartenant aux équipements internes du réacteur et placé au-dessus de l'assemblage. Le tube de guidage et un embout terminal de l'assemblage seront avantageusement munis l'un et l'autre de glissières de guidage des moyens de support de grappe, sur lesquelles les moyens de support ne sont pas simultanément engagés, de façon à tolérer des décentrements éventuels.

Le dispositif pourra comporter des moyens de détection de position de grappe comprenant un contrepoids mobile axialement entre une position basse qu'il occupe au repos et une position haute dans laquelle il est refoulé par la tête ou chaque tête de la grappe externe. Un détecteur permet de déceler la venue du contrepoids dans sa position haute.

L'invention sera mieux comprise à la lecture de la description qui suit d'un mode particulier d'exécution donné à titre d'exemple non limitatif. La description se réfère aux dessins qui l'accompagnent, dans lesquels:

— la Figure 1 est un schéma de principe, en élévation, montrant les composants principaux du dispositif suivant l'invention, placés dans les structures internes supérieures d'un réacteur, l'échelle n'étant pas respectée:

— les Figures 2A et 2B sont des vues en coupe verticale partielle de la portion du dispositif contenue dans le cadre en traits mixtes indiqué par II sur la Figure 1, montrant le mécanisme d'accrochage de grappe en position haute, dans deux dispositions prises successivement par les constituants au cours d'une opération d'accrochage;

— les Figures 3 et 4 sont des vues en coupe suivant les lignes III–III et IV–IV de la Figure 2A;

— la Figure 5 est une vue en coupe suivant un plan vertical de la partie du dispositif contenue dans le cadre V en traits mixtes de la Figure 1, les grappes étant en position basse;

— les Figures 6 et 7 sont des vues en coupe suivant les lignes VI–VI et VII–VII de la Figure 5;

— les Figures 8A et 8B sont des vues en coupe suivant un plan vertical montrant les moyens de détection du dispositif, dans les dispositions correspondant respectivement aux Figures 2A et 2B;

— les Figures 9A et 9B sont des vues en coupe suivant un plan vertical de la portion du dispositif contenu dans le cadre IX en traits mixtes sur la Figure 1, faisant apparaître les moyens de manœuvre respectivement dans les dispositions correspondant aux Figures 2A et 2B.

Le dispositif qui sera maintenant décrit à titre d'exemple appartient au mécanisme de commande d'un ensemble de deux grappes de crayons de réglage déplaçables verticalement, pour les engager plus ou moins profondément dans un même assemblage de combustible. Ce mécanisme comportant deux arbres coaxiaux, on désignera, pour plus de simplicité, celle des grappes qui est commandée par le dispositif de déplacement et d'accrochage par le terme «grappe interne», du fait que son arbre de commande est entouré par l'autre. L'autre grappe sera corrélativement appelée «grappe externe». Mais il doit être entendu que cette terminologie n'est utilisée que pour plus de simplicité.

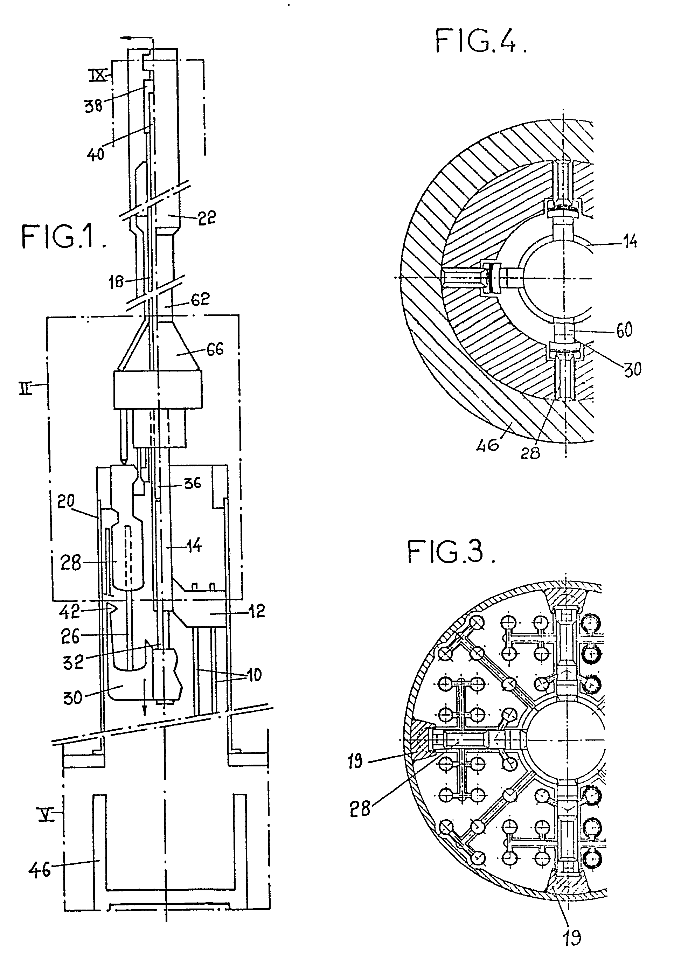

La Figure 1 montre très schématiquement le montage coaxial de deux grappes de commande associées à un mécanisme dont la constitution générale se rapproche de celle décrite dans la demande de brevet FR-A-2 537 764, à laquelle on pourra se reporter. La grappe externe comporte seize crayons 10 portés par une potence en croix 12 solidaire d'un pommeau 14 prévu pour s'accoupler à un manchon expansible terminal 16 d'un arbre d'entrainement 18. La grappe est guidée dans ses déplacements par un tube guide 20 appartenant aux équipements internes supérieurs du réacteur, équipements portés par la plaque supérieure de cœur (non représentée).

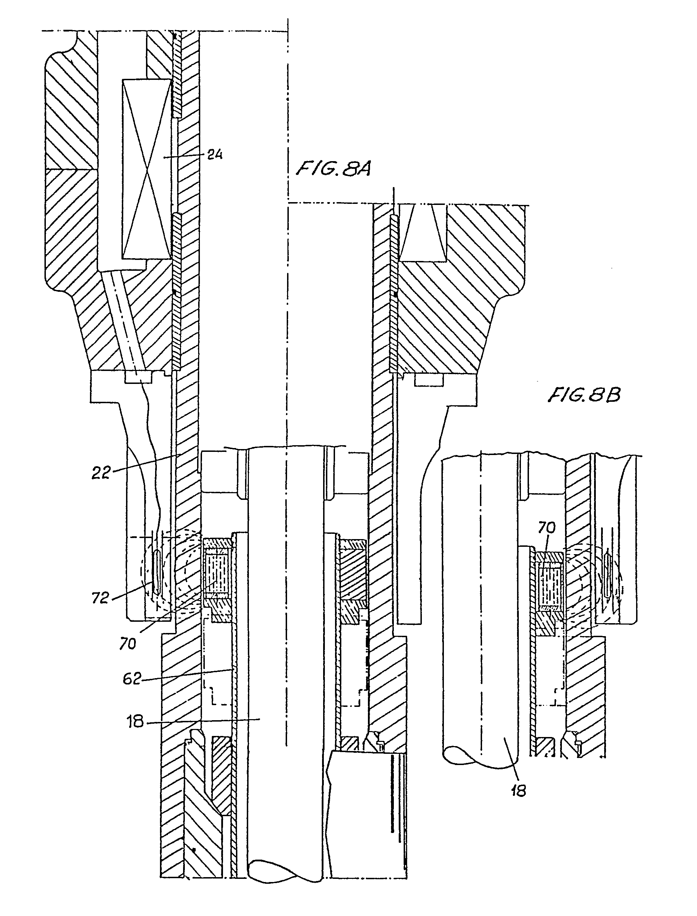

L'arbre 18 est lui-même guidé par un fourreau 22 fixé au couvercle de la cuve du réacteur qu'il traverse de façon étanche. La grappe externe est actionnée par un dispositif moteur électromagnétique à cliquets dont une seule bobine 24 apparaît sur la Figure 8A. Ce dispositif peut être identique à celui du document FR-A-2 537 764 déjà mentionné.

En général, les crayons 10 de la grappe externe contiendront un matériau absorbant les neutrons, tel qu'un composé de bore, et la grappe externe sera utilisée pour piloter le réacteur en enfonçant une longueur plus ou moins importante de la grappe dans l'assemblage.

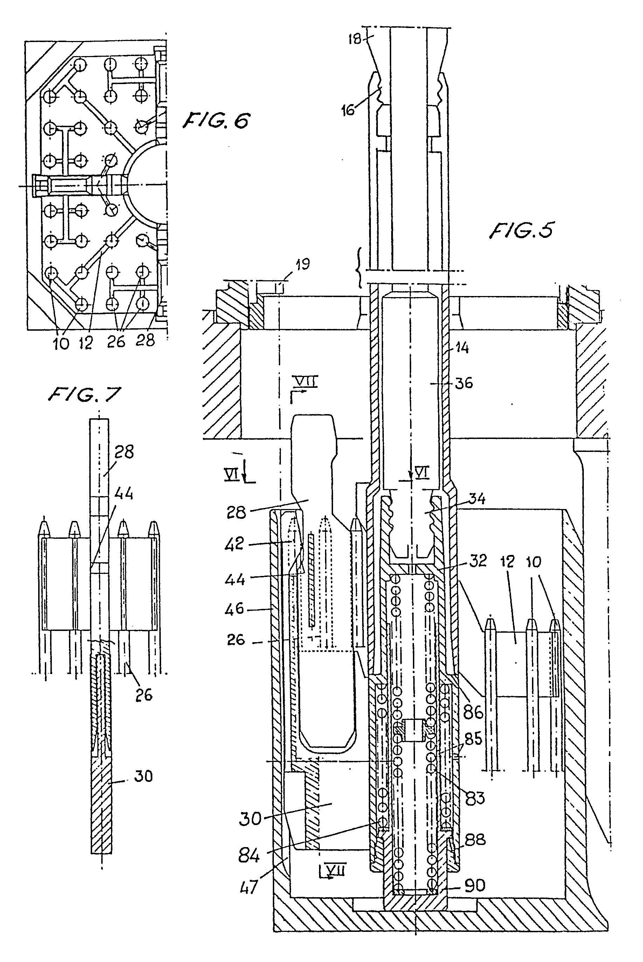

La grappe interne comprend, dans le mode de réalisation montré sur les Figures, quarante crayons 26 répartis en quatre groupes décalés de 90° autour de l'axe de la grappe. On désignera par la suite chaque groupe par le terme de sous-groupe ou de grappette. Chaque sous-groupe comporte une tête 28 en forme de plaque disposée dans le sens radial. Le dispositif de déplacement vertical des sous-grappes comporte une potence en croix 30 munie d'un pommeau 32 dans lequel peuvent se verrouiller les doigts élastiques terminaux d'un manchon 34 appartenant à un arbre de déplacement 36 (Figure 5). Quatre glissières 19 (Figure 3) sont prévues sur le tube 20 pour guider le pommeau 32. L'arbre 36 est commandé par un dispositif de levée utilisant la pression du fluide modérateur et réfrigérant (eau légère dans un réacteur à eau sous pression). Pour cela la partie terminale 40 de l'arbre 18 constitue un plongeur pénétrant de façon étanche dans une chambre 38 de décompression munie d'un conduit de sortie relié à une vanne permettant, de régler la pression qui règne dans la chambre.

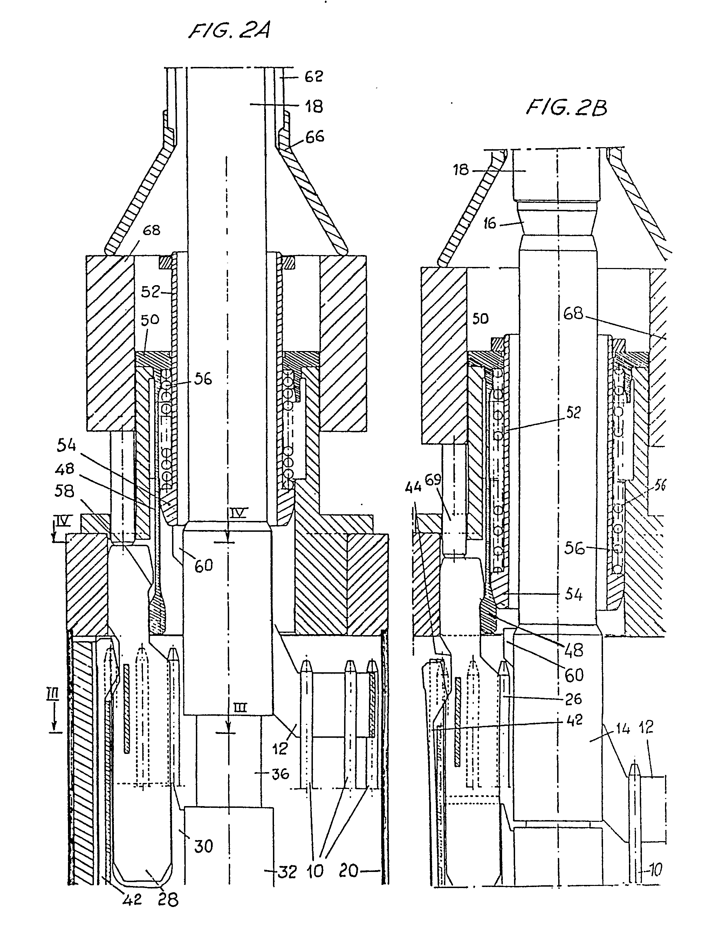

Les crayons 26 contiendront par exemple un matériau fertile. Lorsque la grappe de crayons fertiles est utilisée pour modifier le spectre d'énergie des neutrons au cours de la vie du réacteur, la grappe interne sera complètement enfoncée dans le cœur lorsque les assemblages sont neufs (position montrée en Figure 5). Mais, au cours du fonctionnement du réacteur, on sera amené à extraire des grappes internes et à les accrocher dans la position haute illustrée en Figure 2.

La tête 28 de chaque sous-grappe est prévue pour coopérer avec l'une ou l'autre de deux lames élastiques d'accrochage appartenant l'une 42 à la potence en croix 30, l'autre 48 à un bloc d'accrochage des sous-grappes en position haute.

Les quatre lames élastiques 42 (une par sous-grappe) portées par le pommeau 32 sont disposées chacune à l'extrémité d'un bras de la potence 30. Ces lames élastiques 42 sont destinées à éviter l'envol des sous-grappes lorsque l'arbre interne 36 est en position basse. Chaque lame 42 se termine par un bec qui s'engage dans une encoche 44 de la tête 28 de la sous-grappe correspondante en s'opposant à l'envol. Quand le pommeau 32 est logé dans l'embout supérieur 46 de l'assemblage correspondant (Figure 5), les lames flexibles 42 sont retenues latéralement par l'embout, ne peuvent fléchir et retiennent les sous-grappes de façon positive. Cet effet de verrouillage disparaissant lorsque le pommeau est hors de l'embout 46, la résistance à la flexion des lames 42 doit être choisie suffisante pour éviter un échappement intempestif et un envol des sous-grappes. L'embout porte, comme le tube guide, des glissières 47 de centrage, telles que le pommeau 32 ne puisse pas se dégager d'un jeu de glissières avant d'avoir accosté l'autre.

Le bloc d'accrochage des sous-grappes en position haute (Figures 2 à 4) comporte, lui aussi, une lame flexible 48 par sous-grappe. Ces quatre lames flexibles sont portées par un plateau 50 monté à l'extrémité du tube guide 20. Dans ce plateau coulisse un verrou annulaire 52 terminé par un renflement 54. Un ressort 56 tend à repousser ce verrou vers une position basse où il empêche les lames 48 de fléchir vers l'intérieur en libérant le trajet d'une dent terminale 58 de la tête 28 (Figure 2B). Le pommeau 14 de la grappe externe présente une saillie 60 destinée à venir en butée contre le renflement 54 du verrou 52 et à le soulever (Figure 2A) pour libérer les lames 48, lorsque l'arbre 18 dépasse la position la plus haute qu'il peut prendre en vue du pilotage du réacteur, c'est-à-dire lorsque l'arbre présente une sur-course haute.

Le fonctionnement complet sera décrit plus loin. On peut cependant noter d'ores et déjà que, lorsque les lames flexibles 48 sont libérées par le verrou 52, les têtes 28 des sous-grappes peuvent s'engager dans les logements respectifs ménagés dans le bloc d'accrochage en courbant les lames 48. Le déplacement vers le haut des sous-grappes sous l'action de l'arbre 36 est limité par butée du pommeau 32 contre le bloc d'accrochage (Figure 2A). Dans cette position de butée, les têtes 28 sont légèrement au-dessus de leur position d'accrochage permanent (montrée en Figure 2B).

Le dispositif suivant l'invention comporte un dispositif de détection de la présence des sous-grappes dans le bloc d'accrochage. Ce dispositif comprend une manchette de protection thermique 62 qui, au lieu d'être fixe, est monté dans le fourreau 22 de façon à pouvoir se déplacer entre une position basse (lorsque les sous-grappes sont dans l'assemblage) et une position relevée (Figure 8A). Les moyens de détection fonctionnent par détermination de la venue de la manchette dans sa position haute. Dans le mode de réalisation montré en Figures 8A et 8B, ces moyens comportent un jeu d'aimants permanents 70 qui, dans leur position de repos indiquée en traits mixtes, se trouvent au-dessous d'un jeu de contacts électriques 72 placés dans des ampoules étanches et prévus pour se fermer lors du soulèvement de la manchette 62.

La manchette 62 se termine par une tulipe 66 reposant sur un contrepoids 68 prenant appui, par des poussoirs 69, sur les têtes 28 des sous-grappes. Le contrepoids 68 et la manchette 62 tendent ainsi à chasser les sous-grappes de leur position d'accrochage haut lors du déverrouillage et garantissent la chute de la grappe interne lorsque l'arbre correspondant est ou vient en position basse et que le bloc d'accrochage est déverrouillé.

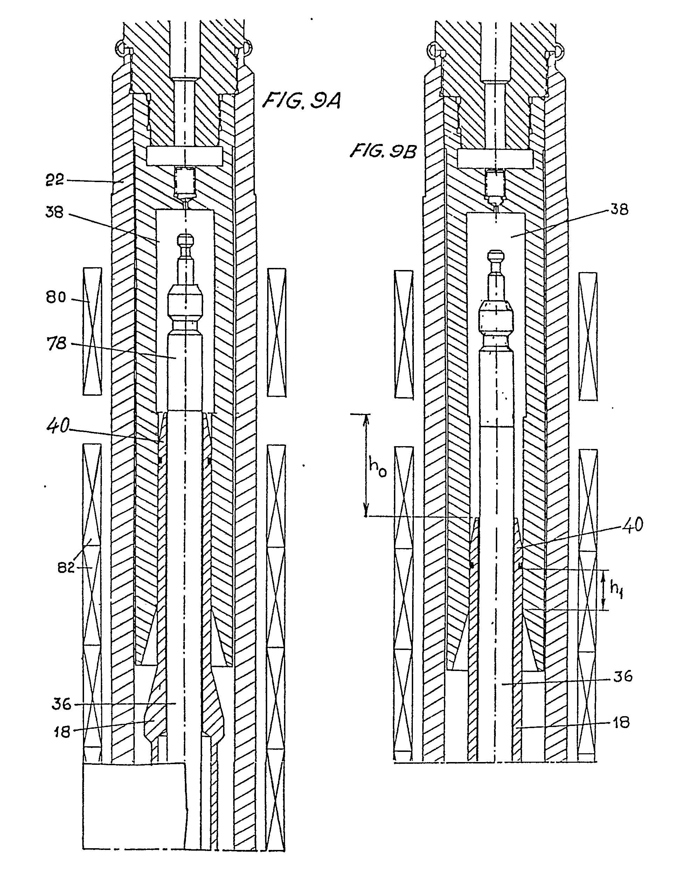

L'arbre 36 de manœuvre de la grappe interne est avantageusement muni de moyens permettant de détecter la présence de cet arbre en fin de course haute. Dans le mode de réalisation montré en Figures 9A et 9B, ces moyens comportent un tronçon ferromagnétique terminal 78 qui, lorsqu'il vient se placer dans une bobine de détection 80, en modifie notablement l'inductance. Ces moyens de détection permettent de confirmer la présence des sous-grappes dans le bloc d'accrochage, décelée également par soulèvement de la manchette thermique. De même, des bobines de détection 82 (Figures 9A et 9B) peuvent être prévues pour déterminer la position de l'arbre 18 de manœuvre de la grappe externe, au cours de ses derniers pas de déplacement en sur-course haute.

Le pommeau 32 de la grappe externe est muni d'un amortisseur à fonctions multiples. Cet amortisseur doit protéger l'assemblage combustible contre les chutes accidentelles de la grappe externe comme de la grappe interne. Il comporte pour cela un plongeur 90 destiné à venir en butée contre le fond de l'embout 46 et deux ressorts concentriques qui tendent à maintenir une collerette du plongeur 90 en appui contre un épaulement interne 88 du pommeau. Ce dernier présente également un épaulement externe 86 qui reçoit l'impact de la potence ou araignée 12 de la grappe externe en cas de chute de cette dernière. La capacité d'amortissement fournie par les ressorts 83 et 84 peut être accrue par amortissement hydraulique, réglé par calibrage de trous 85 d'échappement d'eau hors de la chambre interne du pommeau.

On décrira maintenant une séquence possible d'accrochage de la grappe interne en position haute et de libération de la potence 30, permettant de redescendre le pommeau 32 et l'arbre correspondant 36 et de laisser une entière liberté de manœuvre de la grappe externe, constituée de crayons absorbants 10.

La grappe externe de crayons absorbants est tout d'abord amenée en fin de sur-course haute, c'est-à-dire dans la position montrée en Figures 2A, 8A et 9A, à l'aide des moyens électromagnétiques de déplacement, comportant la bobine 24. Cette fin de sur-course correspond à l'engagement, dans la dernière cannelure de l'arbre 18, de cliquets (non représentés) équipant le fourreau fixe 22.

Le bloc d'accrochage est à ce moment là déverrouillé, les lames 48 étant libérées du fait que le verrou 52 est soulevé par la saillie 60 (Figure 2A). Les bobines de détection 82 permettent de vérifier que la grappe externe a atteint la fin de sa sur-course haute.

Les sous-grappes de la grappe interne peuvent alors être levées à l'aide de l'arbre 36, actionné par décompression de la chambre 38. La levée est habituellement provoquée en amenant la pression dans la chambre 38 à une valeur inférieure de 15 à 20 bars à celle qui règne dans le réacteur. L'arbre 36 vient alors dans la position montrée en Figures 2A, 8A et 9A. Les têtes 28 des sous-grappes s'engagent à fond dans les logements prévus dans le bloc d'accrochage, légèrement au-dessus du niveau d'accrochage définitif (Figure 2A). Dans cette position, les têtes 28 soulèvent les poussoirs 69, le contrepoids 68 et la manchette 62. La présence des sous-grappes dans le bloc d'accrochage peut en conséquence être détectée de deux façons différentes. D'une part, les interrupteurs contenus dans les ampoules 72 sont fermés par les aimants 70. D'autre part, la présence de l'arbre 36 dans sa position extrême haute est détectée par la bobine 80, en face de laquelle vient se placer le tronçon magnétique 78.

Pour verrouiller les sous-grappes dans le bloc d'accrochage, on redescend l'arbre 18 d'une hauteur $h_0$ (Figure 9B). La détermination de l'amplitude de la descente est réalisée à la fois par comptage du nombre de pas d'avance des moyens électromagnétiques et par utilisation des bobines 82 de détection. Les pièces doivent être dimensionnées de façon que, après descente d'amplitude $h_0$ de l'arbre 18, ce dernier soit encore engagé de façon étanche dans la chambre de décompression 38. On peut notamment adopter une hauteur $h_0$ égale à cinq pas d'avance et une hauteur $h_1$ égale à deux pas.

Au cours de cette opération de descente, la dépression dans la chambre 38 est maintenue à la valeur où elle a été amenée précédemment. L'arbre 36 auquel est suspendue la grappe interne est donc toujours en position haute. Mais le verrou 54, n'étant plus repoussé vers le haut, vient s'appuyer contre le renflement terminal des lames 48 et applique ces lames contre les dents 58 des sous-grappes.

La dépression qui règne dans la chambre de compression 38 est alors progressivement diminuée. L'arbre de manœuvre 36 descend. Les sous-grappes s'immobilisent dès que les têtes 28 sont venues dans la position montrée en Figure 2B. Ce début de chute de l'arbre 36 est indiqué par le changement du signal fourni par la bobine 80.

Lorsque la chute de l'arbre 36 et du pommeau 32 se poursuit, les lames 42 d'anti-envol portées par le pommeau sortent des encoches 44, en se déformant pour passer de la position indiquée en tirets à la position indiquée en traits pleins sur la Figure 2B. Puis ces lames glissent le long de la tranche des têtes 28 des sous-grappes et reprennent ensuite leur position de repos (Figure 1). La fin de la chute du pommeau est ralentie par l'amortisseur incorporé dans le pommeau (Figure 5). On peut immédiatement constater que les sous-grappes sont bien restées accrochées par vérification que tous les interrupteurs dans les ampoules 72 sont encore fermés.

On voit que, une fois cet accrochage effectué et le pommeau 32 complètement descendu, la manœuvre de la grappe externe est complètement libre.

Le décrochage des sous-grappes et leur mise en place dans l'assemblage combustible sont réalisés par des opérations sensiblement inverses de celles qui viennent d'être décrites. Il suffit de noter que l'on relève l'arbre 36 en réglant la dépression dans la chambre de décompression 38 à une valeur suffisamment faible pour que l'arbre remonte à vitesse modérée. La dépression dans la chambre 38 est ensuite portée à son maximum, avant d'effectuer le déverrouillage par manœuvre de l'arbre 18.

Le mode de réalisation du dispositif qui vient d'être décrit à titre d'exemple n'est nullement limitatif. Le dispositif peut comporter des organes supplémentaires, notamment pour assurer une plus grande fiabilité de détection. En particulier, des détecteurs supplémentaires destinés à vérifier la présence des sous-grappes en fin de course basse peuvent être placés dans les embouts d'assemblage. Un amortisseur hydraulique supplémentaire peut être prévu pour limiter les chocs.

## Revendications

1. Dispositif de déplacement et d'accrochage d'une grappe interne de crayons de commande déplaçable verticalement pour l'insérer dans un assemblage de combustible de réacteur nucléaire et pour l'extraire de l'assemblage dispositif qui est muni également d'une grappe externe (10–14) déplaçable coaxialement à la première et remplissant une fonction différente, ledit dispositif comprenant un arbre vertical (36) de manœuvre portant des moyens (30–34) de support de la grappe interne et muni de moyens moteurs (38, 40) permettant de le déplacer entre une position basse où la grappe interne repose sur l'assemblage (46) et une position haute où la grappe interne est hors de l'assemblage, caractérisé en ce que ladite grappe interne est constituée de plusieurs sous-grappes avant chacune une tête (28), en ce que les moyens de support (30–34) sont prévus pour recevoir individuellement les têtes (28) associées aux différentes sous-grappes, et en ce que le dispositif comprend un mécanisme (48–58) d'accrochage des sous-grappes en position haute comportant au moins une lame élastique (48) par sous-grappe, destiné à s'accrocher à la tête (28) et à la retenir contre l'action de la pesanteur s'exerçant sur la sous-grappe, et un verrou mobile (52) sollicité élastiquement vers une première position où il interdit le dégagement des lames élastiques (48) et amené dans une seconde position, où il permet aux lames élastiques (48) de fléchir en libérant les sous-grappes, par le mécanisme de commande de la grappe externe lorsque ce dernier est actionné au-delà de la position la plus haute prise par cette dernière en fonctionnement normal.

2. Dispositif selon la revendication 1, caractérisé par un tube de guidage fixe (20) placé au-dessus de l'assemblage et portant le mécanisme (48–58) d'accrochage en position haute.

3. Dispositif selon la revendication 1 ou 2, caractérisé en ce que l'arbre vertical (36) de manœuvre de la grappe interne fait saillie vers le haut dans un fourreau à travers un arbre tubulaire (18) de support de la grappe externe pour délimiter dans ce fourreau une chambre (38) qui est fermée par l'arbre (18) de support de la grappe externe lorsque ce dernier est en position haute, des moyens étant prévus pour diminuer la pression qui règne dans la chambre (38) au-dessous de celle qui règne dans l'ensemble de la cuve du réacteur.

4. Dispositif selon l'une quelconque des revendications 1 à 3, caractérisé en ce qu'il comporte de plus des moyens de détection de position de grappe interne, comprenant un contrepoids (68) mobile axialement entre une position basse qu'il occupe au repos et une position haute dans laquelle il est refoulé par la tête ou chaque tête (28) de grappe externe et un détecteur (72) de la position axiale du contrepoids.

5. Dispositif selon la revendication 4, caractérisé en ce que le détecteur (72) est placé sur un fourreau (22) de traversée de la cuve du réacteur et coopère avec une manchette de protection thermique (62) coulissante, en appui sur le contrepoids.

6. Dispositif selon l'une quelconque des revendications précédentes, caractérisé en ce que le tube fixe (46) de guidage et l'embout de l'assemblage de combustible comportent des glissières (19, 47) de guidage de grappe, les glissières étant disposées de telle façon que la grappe ne quitte pas une glissière avant d'accoster l'autre.

## Patentansprüche

1. Verstell- und Haltevorrichtung für ein inneres Kontrollstabbündel, das in vertikaler Richtung verstellbar ist, um es in ein Brennelementbündel eines Kernreaktors einzuführen und aus diesem herauszuziehen, wobei die Vorrichtung auch mit einem äusseren Stabbündel (10–14) ausgestattet ist, das koaxial zum ersten Stabbündel verstellbar ist und eine andere Funktion erfüllt, wobei die Vorrichtung ferner eine vertikale Betätigungsachse (36) aufweist, welche Trageinrichtungen (30–34) für das innere Stabbündel trägt und mit Motoreinrichtungen (38, 40) ausgestattet ist, die es ermöglichen, die Achse zwischen einer abgesenkten Stellung, in welcher das innere Stabbündel auf dem Brennelementbündel (46) ruht, und einer angehobenen Stellung zu verstellen, in welcher das innere Stabbündel sich ausserhalb des Brennelementbündels befindet, dadurch gekennzeichnet, dass das innere Stabbündel aus mehreren Unterbündeln gebildet ist, die je einen Kopf (28) aufweisen, dass die Trageinrichtungen (30–34) dazu vorgesehen sind, um die den verschiedenen Unterbündeln zugeordneten Köpfe (28) einzeln aufzunehmen, und dass die Vorrichtung einen zum Halten der Unterbündel in der angehobenen Stellung bestimmten Mechanismus (48–58), der zumindest eine elastische Zunge (48) pro Unterbündel aufweist, welche dazu bestimmt ist, am Kopf (28) anzugreifen und diesen gegen die Wirkung der auf das Unterbündel wirkenden Schwerkraft zu halten, und einen beweglichen Riegel (52) umfasst, der in eine erste Stellung elastisch vorgespannt ist, in welcher er ein Lösen der elastischen Zungen (48) verhindert, und durch den Betätigungsmechanismus des äusseren Stabbündels, wenn dieser Mechanismus über die vom äusseren Stabbündel im Normalbetrieb eingenommene höchste Stellung hinaus betätigt wird, in eine zweite Stellung versetzbar ist, in welcher er den Zungen (48) gestattet, sich zu biegen und die Unterbündel freizugegeben.

2. Vorrichtung nach Anspruch 1, gekennzeichnet durch ein feststehendes Führungsrohr (20), das oberhalb des Brennelementbündels vorgesehen ist und den Haltemechanismus (48–58) für die angehobene Stellung trägt.

3. Vorrichtung nach Anspruch 1 oder 2, dadurch gekennzeichnet, dass die vertikale Betätigungsachse (36) des inneren Stabbündels nach ober durch eine zum Tragen des äusseren Stabbündels dienende rohrförmige Achse (18) hindurch in eine Hülse ragt, um in dieser eine Kammer (38) zu begrenzen, die durch die Tragachse (18) für das äussere Stabbündel geschlossen ist, wenn diese sich in der angehobenen Stellung befindet, wobei Einrichtungen vorgesehen sind, um den in der Kammer (38) herrschenden Druck unter jenen abzusenken, der in der Gesamtheit des Reaktorgefässes herrscht.

4. Vorrichtung nach einem der Ansprüche 1–3, dadurch gekennzeichnet, dass ausserdem Einrichtungen zum Ermitteln der Stellung des inneren Stabbündels vorgesehen sind, die ein Gegengewicht (68), das in axialer Richtung zwischen einer abgesenkten Stellung, die es im Ruhestand einnimmt, und einer angehobenen Stellung bewegbar ist, in welche es vom Kopf bzw. jedem Kopf (28) des äusseren Stabbündels zurückgedrängt ist, und einen Detektor (72) für die Axiallage des Gegengewichtes aufweisen.

5. Vorrichtung nach Anspruch 4, dadurch gekennzeichnet, dass der Detektor (72) in einer Hülse (22) angeordnet ist, welche das Reaktorgefäss durchsetzt und mit einer am Gegengewicht anliegenden Wärmeschutz-Gleitmanschette (62) zusammenwirkt.

6. Vorrichtung nach einem der vorhergehenden Ansprüche, dadurch gekennzeichnet, dass das feststehende Führungsrohr (46) und das Endstück des Brennelementbündels Gleitführungsschienen (19, 47) für das Stabbündel aufweisen, die derart angeordnet sind, dass das Stabbündel eine Gleitschiene erst verlässt, sobald es in die andere eingetreten ist.

**Claims**

1. A device for displacing and latching an inner cluster of control rods which is vertically movable into and out of a fuel assembly of a nuclear reactor, the device being also provided with an outer cluster (10–14) which is movable coaxially to the first cluster and which fulfils a different function, said device comprising a vertical drive shaft (36) carrying means (30–34) for supporting the inner cluster and provided with motor means (38, 40) for moving it between a lower position where the inner cluster rests on the assembly (46) and a higher position where the inner cluster is out of the assembly, characterized in that said inner cluster consists of a plurality of subclusters each having a head (28), in that the support means (30–34) are arranged for individually receiving the heads (28) associated with the different subclusters, and in that the device comprises a mechanism (48–58) for latching the subclusters in the higher position, having at least one resilient finger (48) per subcluster, intended to fasten onto the head (28) and to retain it against gravity forces exerted on the subcluster and a movable bolt (52) urged resiliently toward a first position where it prevents disengagement of the resilient fingers (48) and moved into a second position, where it permits the resilient fingers (48) to bend and to free the subclusters, by the drive mechanism of the outer cluster when the latter is moved beyond the highest position assumed by the latter during normal operation thereof.

2. Device according to claim 1, characterized by a stationary guide tube (20) located above the assembly and carrying the mechanism (48–58) for latching in the higher position.

3. Device according to claim 1 or 2, characterized in that the vertical shaft (36) driving the inner cluster projects upwardly into a sleeve through a tubular shaft (18) supporting the outer cluster for defining a chamber (38) within the sleeve which is closed by the shaft (18) supporting the outer cluster when the latter is in the higher position, means being provided for reducing the pressure which prevails in the chamber (38) below the pressure which prevails in the whole vessel of the reactor.

4. Device according to any one of claims 1–3, characterized in that it further comprises means for detecting the position of the inner cluster, comprising a counter-weight (68) movable axially between a low position which it occupies at rest and a high position into which it is pushed by the head or each head (28) of the outer cluster and a sensor (72) for detecting the axial position of the counter-weight.

5. Device according to claim 4, characterized in that the sensor (72) is placed on a passage sleeve (22) through the vessel of the reactor and cooperates with a sliding thermal protection muff (62) supported by the counter-weight.

6. Device according to any one of the preceding claims, characterized in that the fixed guide tube (46) and the end piece of the fuel assembly comprise cluster guide slides (19, 47), the slides being disposed so that the cluster does not leave a slide before engaging the other.

FIG.4.

FIG.1.

FIG.3.

FIG. 2A

FIG. 2B

FIG. 6

FIG. 5

FIG. 7

EP 0 188 163 B1

4/5

FIG.8A

FIG.8B

5/5

FIG. 9A

FIG. 9B

22

38

80

78

40

82

36

18

38

$h_o$

40

$h_1$

36

18